# EUROPÄISCHE PATENTSCHRIFT

(11) **EP 0 700 935 B1**
(45) Veröffentlichungstag und Bekanntmachung des Hinweises auf die Patenterteilung: **16.06.1999**
(21) Anmeldenummer: 95113437.8
(22) Anmeldetag: 26.08.1995
(51) Int. Cl.: C08F 10/00

(54) **Geträgerte Metallocen-Katalysatorsysteme**
Supported metallocene catalyst system
Système catalytique à base de métallocène sur support

(30) Priorität: 07.09.1994 DE 4431837
(43) Veröffentlichungstag der Anmeldung: 13.03.1996
(73) Patentinhaber: BASF Aktiengesellschaft, 67063 Ludwigshafen (DE)
(72) Erfinder: Fischer, David, Dr., D-67161 Gönnheim (DE); Langhauser, Franz, Dr., D-67098 Bad Dürkheim (DE); Kerth, Jürgen, Dr., D-67316 Carlsberg (DE); Schweier, Günther, Dr., D-67159 Friedelsheim (DE); Lynch, John, Dr., D-67590 Monsheim (DE); Görtz, Hans-Helmut, Dr., D-67251 Freinsheim (DE)

(56) Entgegenhaltungen:
- EP-A- 0 500 944
- EP-A- 0 573 120
- DIE MAKROMOLEKULARE CHEMIE, RAPID COMMUNICATIONS, Bd. 14, Nr. 2, Februar 1993 Seiten 109-114, XP 000334497 CHIEN JAMES C W 'Olefin copolymerization...'

## Beschreibung

Die vorliegende Erfindung betrifft geträgerte Katalysatorsysteme, erhältlich durch
a1) Herstellung einer Mischung aus
   A) mindestens einem Metallocenkomplex der allgemeinen Formel I 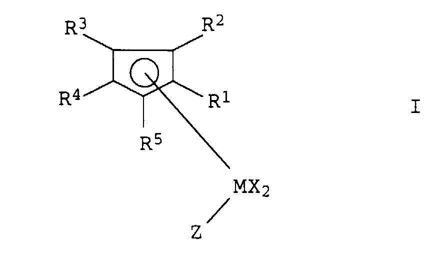 in der die Substituenten folgende Bedeutung haben:
      - M: Titan, Zirkonium, Hafnium, Vanadium, Niob oder Tantal,
      - X: Fluor, Chlor, Brom, Iod, Wasserstoff, C₁- bis C₁₀-Alkyl, C₆- bis C₁₅-Aryl oder -OR⁶,
      wobei R⁶
      C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
      - R¹ bis R⁵: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R⁷)₃ mit
      - R⁷: C₁- bis C₁₀-Alkyl, C₆- bis C₁₅-Aryl oder C₃- bis C₁₀-Cycloalkyl,
      - Z: für X oder 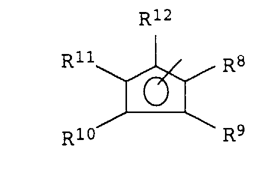 steht,
      wobei die Reste R⁸ bis R¹²
      Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende cyclische Gruppen stehen können, oder Si(R¹³)₃ mit
      - R¹³: C₁- bis C₁₀-Alkyl, C₆- bis C₁₅-Aryl oder C₃- bis C₁₀-Cycloalkyl,
      oder wobei die Reste R⁴ und Z gemeinsam eine Gruppierung -[Y(R¹⁴)₂]ₙ-E- bilden, in der
      - Y: für Silicium, Germanium, Zinn oder Kohlenstoff steht,
      - R¹⁴: für Wasserstoff, C₁- bis C₁₀-Alkyl, C₃- bis C₁₀-Cycloalkyl oder C₆- bis C₁₅-Aryl,
      - n: für die Zahlen 1, 2, 3 oder 4
      und
      - E: für 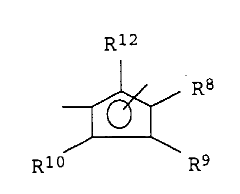 steht
      und
   B) mindestens einer Metallverbindung der allgemeinen Formel II

      M¹(R¹⁵)ₘ(X¹)ₒ II

      in der
      - M¹: ein Alkali-, Erdalkalimetall oder ein Metall der III. Hauptgruppe des Periodensystems bedeutet,
      - R¹⁵: Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
      - X¹: Fluor, Chlor, Brom oder Jod,
      - m: eine ganze Zahl von 1 bis 3,
      und
      - o: eine ganze Zahl von 0 bis 2, wobei die Summe m+o der Wertigkeit von M¹ entspricht
      in einem inerten Lösungsmittel
a2) Zugabe eines Trägers, der gegebenenfalls mit mindestens einer Metallverbindung der allgemeinen Formel III

   M²(R¹⁶)ₚ(X²)_{q} III

   in der
   - M²: ein Alkali-, Erdalkalimetall, ein Metall der III. Hauptgruppe des Periodensystems oder Silicium bedeutet,
   - R¹⁶: Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
   - X²: Fluor, Chlor, Brom oder Jod,
   - p: eine ganze Zahl von 1 bis 3,
   und
   - q: eine ganze Zahl von 0 bis 2, wobei die Summe p+q der Wertigkeit von M² entspricht vorbehandelt sein kann, zu der unter a1) erhaltenen Mischung,
a3) Entfernen des Lösungsmittels im Vakuum
   und
b) anschließender Aktivierung durch Umsetzung mit einer Lösung oder Suspension einer metalloceniumionenbildenden Verbindung.

Weiterhin betrifft die Erfindung Verfahren zur Herstellung derartiger geträgerter Katalysatorsysteme, deren Verwendung zur Herstellung von Polyolefinen sowie Verfahren zur Herstellung von Polyolefinen mit Hilfe dieser geträgerten Katalysatorsysteme.

Homogene Metallocen-Katalysatoren haben in den letzten Jahren wohldefinierte Poly-1-olefine mit enger Molekulargewichtsverteilung und hoher chemischer Einheitlichkeit zugänglich gemacht. Eine industrielle Nutzung erfordert jedoch eine Heterogenisierung dieser Katalysatoren, so daß eine einfache Handhabbarkeit des Katalysators und eine effektive Morphologiekontrolle des Produktes gewährleistet sind. Geträgerte Metallocen-Katalysatoren sind an sich bekannt. So beschreibt die EP-A 323 716 solche Systeme, bei denen feuchtes SiO₂ mit einem Aluminiumtrialkyl umgesetzt wird, so daß ein aluminoxanbeladener Träger entsteht. Auf diesen Träger wird das Metallocen aufgebracht, wobei ein aktiver Katalysator entsteht.

Aus der WO 91/09882 ist die Herstellung eines geträgerten, kationischen Metallocen-Katalysators durch Aufbringen der Reaktionsmischung eines Dialkylmetallocens mit einer ionischen Verbindung, die als Kation eine Brönsted-Säure und als Anion ein nichtkoordinierendes Gegenion wie Tetrakis(pentafluorphenyl)borat besitzt, auf einen anorganischen Träger bekannt. Auch hierbei wird ein aktiver Katalysator erhalten.

Solche schon aktive Katalysatoren führen leicht zu Problemen bei der Dosierung des Katalysators in den Reaktor.

Vorteilhaft ist daher ein noch inaktiver Katalysator, der erst zu einem späteren Zeitpunkt, beispielsweise bei der Dosierung oder auch erst im Reaktor, aktiviert werden kann. Die EP-A 573 120 beschreibt ein Verfahren, wonach die Lösung oder Suspension eines neutralen halogenierten Metallocens, in Abwesenheit von freiem Aluminiumalkyl, mit einem vorbehandelten Träger längere Zeit gerührt wird. Hierbei wird ein geringer Teil des Metallocens am Träger fixiert und kann später durch Umsetzung mit einer Lösung eines ionisierenden Reagens, wie Triphenylmethyltetrakis(pentafluorphenyl)borat, aktiviert werden. Nachteilig bei dem beschriebenen Verfahren ist, daß das eingesetzte Metallocen nur zu einem geringen Teil auf dem Träger fixiert wird. Darüber hinaus ist gerade bei technisch relevanten Metallocenen, wie rac.-Dimethylsilylbis(2-methylbenzindenyl)zirkondichlorid, die Löslichkeit der Dichloride sehr gering, wodurch das Verfahren weiter erschwert wird.

EP-A 0 500 944 beschreibt ein Trägerungsverfahren, wobei das Metallocen zum Träger hinzugefügt wird und die entstandene Mischung filtriert und gewaschen wird. Das eingesetzte Metallocen ist nur zum kleinen Teil auf dem Träger fixiert, das erhaltene Polymerisat pulverförmig.

Aufgabe der vorliegenden Erfindung war es daher, geträgerte Katalysatorsysteme zur Verfügung zu stellen, die die genannten Nachteile nicht aufweisen, die insbesondere zu einem beliebigen Zeitpunkt aktivierbar sind und wobei das angewandte Verfahren nicht auf gut lösliche Metallocene beschränkt ist. Weiterhin soll das eingesetzte Metallocen zu einem großen Teil auf dem Träger fixiert werden.

Demgemäß wurden die eingangs definierten geträgerten Katalysatorsysteme gefunden.

Weiterhin wurden Verfahren zur Herstellung derartiger geträgerter Katalysatorsysteme, deren Verwendung zur Herstellung von Polyolefinen sowie Verfahren zur Herstellung von Polyolefinen mit Hilfe dieser geträgerten Katalysatorsysteme gefunden.

Die erfindungsgemäßen geträgerten Katalysatorsysteme sind dadurch erhältlich, daß in einer ersten Stufe a) eine Mischung aus einem Metallocenkomplex der allgemeinen Formel I und einer Metallverbindung der allgemeinen Formel II auf einen Träger aufgebracht werden.

Als Träger werden vorzugsweise feinteilige Feststoffe eingesetzt, deren Teilchendurchmesser im Bereich von 1 bis 200 µm liegen, insbesondere 30 bis 70 µm. Es können sowohl anorganische als auch organische Trägermaterialien eingesetzt werden, wobei die anorganischen bevorzugt sind.

Geeignete Trägermaterialien sind beispielsweise Kieselgele, bevorzugt solche der Formel SiO₂ • a Al₂O₃, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace.

Andere anorganische Verbindungen wie Al₂O₃ oder MgCl₂ oder diese Verbindungen enthaltende Mischungen können ebenfalls als Trägermaterialien eingesetzt werden.

Von den organischen Trägermaterialien sind insbesondere feinteilige Polyolefine wie Polypropylen zu nennen.

Die Trägermaterialien können direkt eingesetzt werden oder sie können mit mindestens einer Metallverbindung der allgemeinen Formel III vorbehandelt sein.

Von den Metallverbindungen der allgemeinen Formel III

M²(R¹⁶)ₚ(X²)_{q} III

sind diejenigen bevorzugt, in denen
- M²: Li, Na, K, Mg oder Al bedeutet,
- R¹⁶: C₁- bis C₆-Alkyl, insbesondere C₁- bis C₄-Alkyl
und
- X²: Chlor.

Besonders bevorzugt sind diejenigen Metallverbindungen III, bei denen q Null ist, insbesondere Magnesiumalkyle und Aluminiumalkyle wie Mg(n-Butyl)₂ und Al(i-Butyl)₃. Sind in einer Verbindung mehrere Reste R¹⁶ bzw. X² vorhanden, so können diese auch jeweils verschieden sein.

Vorzugsweise wird die Metallverbindung der allgemeinen Formel III als Lösung zu einer Suspension des Träges gegeben. Als Lösungs- bzw. Suspensionsmittel sind insbesondere Kohlenwasserstoffe wie Heptan geeignet. Die Menge an Metallverbindung III kann in weiten Grenzen variieren, besonders geeignet sind 0 bis 75 Gew.-% pro g Träger. Die Temperaturen, Reaktionszeiten und Drücke sind an sich unkritisch, bevorzugt sind Temperaturen von 0 bis 80°C, Reaktionszeiten von 0,1 bis 48 Stunden und Drücke von 0,5 bis 2,0 bar.

Es hat sich als geeignet erwiesen, nach der Trägervorbehandlung die überschüssige Metallverbindung III durch Auswaschen, beispielsweise mit Kohlenwasserstoffen wie Pentan oder Hexan, zu entfernen und den Träger zu trocknen.

Auf den Träger - vorbehandelt oder nicht - wird nun die Mischung aus Metallocenkomplex I und Metallverbindung II aufgebracht.

Von den Metallocenkomplexen der allgemeinen formel I sind 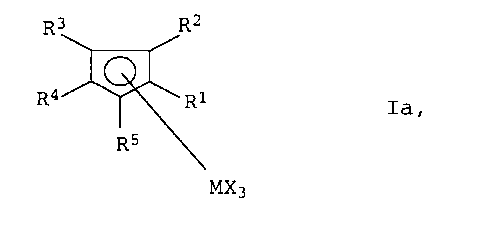 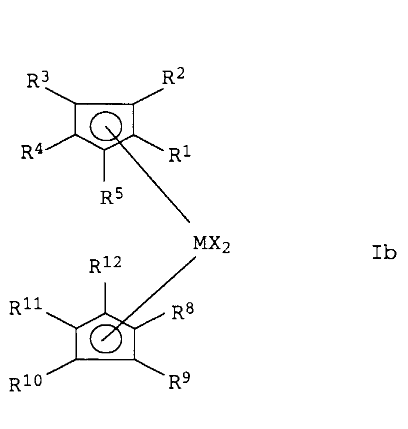 und 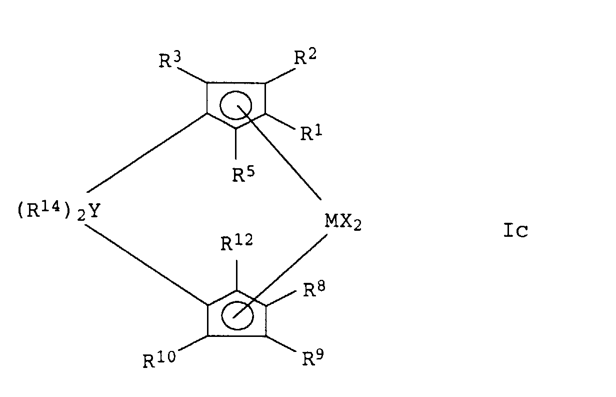 bevorzugt.

Unter der Bezeichnung Metallocene werden also nicht nur die Bis(η-cyclopentadienyl)-Metall-Komplexe verstanden.

Von den Verbindungen der Formel Ia sind insbesondere diejenigen bevorzugt, in denen
- M: Titan, Zirkonium oder Hafnium,
- X: Chlor und
- R¹ bis R⁵: Wasserstoff oder C₁- bis C₄-Alkyl bedeuten.

Von den Verbindungen der Formel Ib sind als bevorzugt diejenigen zu nennen, bei denen
- M: für Titan, Zirkonium oder Hafnium steht,
- X: für Chlor, C₁- bis C₄-Alkyl oder Phenyl,
- R¹ bis R⁵: Wasserstoff, C₁- bis C₄-Alkyl oder Si(R⁷)₃,
- R⁸ bis R¹²: Wasserstoff, C₁- bis C₄-Alkyl oder Si(R¹³)₃ bedeuten.

Insbesondere sind die Verbindungen der Formel Ib geeignet, in denen die Cyclopentadienylreste gleich sind.

Beispiele für besonders geeignete Verbindungen sind u.a.:
Bis(cyclopentadienyl)zirkoniumdichlorid,
Bis(pentamethylcyclopentadienyl)-zirkoniumdichlorid,
Bis(cyclopentadienyl)-diphenylzirkonium,
Bis(methylcyclopentadienyl)-zirkoniumdichlorid,
Bis(ethylcyclopentadienyl)-zirkoniumdichlorid,
Bis(n-butylcyclopentadienyl)-zirkoniumdichlorid und
Bis(trimethylsilylcyclopentadienyl)-zirkoniumdichlorid sowie die entsprechenden Dimethylzirkoniumverbindungen.

Von den Verbindungen der Formel Ic sind diejenigen besonders geeignet, in denen
- R¹ und R⁸: gleich sind und für Wasserstoff oder C₁- bis C₁₀-Alkylgruppen stehen,
- R⁵ und R¹²: gleich sind und für Wasserstoff, eine Methyl-, Ethyl-, iso-Propyl- oder tert.-Butylgruppe stehen
- R², R³, R⁹ und R¹⁰: die Bedeutung
R³ und R¹⁰ C₁- bis C₄-Alkyl
R² und R⁹ Wasserstoff
haben oder zwei benachbarte Reste R² und R³ sowie R⁹ und R¹⁰ gemeinsam für 4 bis 12 C-Atome aufweisende cyclische Gruppen stehen,
- R¹⁴: für C₁- bis C₈-Alkyl,
- M: für Titan, Zirkonium oder Hafnium,
- Y: für Silicium, Germanium, Zinn oder Kohlenstoff und
- X: für Chlor oder C₁- bis C₄-Alkyl stehen.

Beispiele für besonders geeignete Komplexverbindungen sind u.a.
Dimethylsilandiylbis (cyclopentadienyl)-zirkoniumdichlorid,
Dimethylsilandiylbis(indenyl)-zirkoniumdichlorid,
Dimethylsilandiylbis(tetrahydroindenyl)-zirkoniumdichlorid,
Ethylenbis(cyclopentadienyl)-zirkoniumdichlorid,
Ethylenbis(indenyl)-zirkoniumdichlorid,
Ethylenbis(tetrahydroindenyl)-zirkoniumdichlorid,
Tetramethylethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-3-tert.butyl-5-methylcyclopentadienyl)-dimethylzirkonium,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.butylindenyl)-zirkoniumdichlorid,
Diethylsilandiylbis(-2-methylindenyl)-zirkoniumdibromid,
Dimethylsilandiylbis(-3-methyl-5-methylcyclopentadienyl)-zirkoniumdichlorid,
Dimethylsilandiylbis(-3-ethyl-5-isopropylcyclopentadienyl)-zirkoniumdichlorid,
Dimethylsilandiylbis(-2-methylindenyl)-zirkoniumdichlorid,
Dimethylsilandiylbis(-2-methylindenyl)-zirkoniumdimethyl,
Dimethylsilandiylbis(-2-methylbenzindenyl)-zirkoniumdichlorid
Dimethylsilandiylbis(-2-methylbenzindenyl)-zirkoniumdimethyl und
Dimethylsilandiylbis(-2-methylindenyl)-hafniumdichlorid.

Die Reste X können in einem Metallocenkomplex auch verschieden sein, vorzugsweise sind sie jedoch gleich.

Besonders bevorzugt sind Metallocenkomplexe der allgemeinen Formel I, bei denen mindestens einer der Reste R¹ bis R⁵ von Wasserstoff verschieden ist und insbesondere zwei benachbarte Reste gemeinsam für 8 8 bis 12 C-Atome aufweisende cyclische Gruppen stehen, vorzugsweise werden Verbindungen des Zirkoniums eingesetzt, insbesondere der Formel Ic, besonders bevorzugt Dimethylsilandiylbis (-2-methylindenyl)-zirkoniumdichlorid.

Die synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Von den Metallverbindungen II

M¹(R¹⁵)ₘ(X¹)ₒ II

sind diejenigen bevorzugt, in denen
- M¹: Li, Mg oder Al bedeutet,
- R¹⁵: C₁- bis C₆-Alkyl, insbesondere C₁- bis C₄-Alkyl
und
- X¹: Chlor.

Besonders bevorzugt sind Metallverbindungen II, bei denen o Null ist, insbesondere Magnesiumalkyle und Aluminiumalkyle wie Mg(n-Butyl)₂ und Al(i-Butyl)₃. Sind in einer Verbindung mehrere Reste R¹⁵ und X¹ vorhanden, so können diese auch jeweils verschieden sein.

Sind die Trägermateralien vorbehandelt worden, so können die Metallverbindungen II von den Metallverbindungen III verschieden sein, bevorzugt sind sie jedoch gleich.

Das Aufbringen der Mischung aus Metallocenkomplex I und Metallverbindung II auf den Träger geht vorzugsweise so vonstatten, daß der Metallocenkomplex I in einem inerten Lösungsmittel, vorzugsweise in aromatischen Kohlenwasserstoffen wie Toluol, gelöst oder suspendiert wird, mit der Metallverbindung II, die vorzugsweise ebenfalls gelöst ist, beispielsweise in Heptan, umgesetzt wird und dann der Träger zugegeben wird.

Das molare Verhältnis an Metallocenkomplex I zu Metallverbindung II beträgt 100:1 bis 10⁻⁴:1, vorzugsweise 1:1 bis 10⁻²:1. Die Menge an Träger zu Metallocenkomplex I beträgt vorzugsweise 10 g:1 µmol bis 10⁻² g:1 µmol.

Sowohl das Versetzen des Metallocenkomplexes I mit der Metallverbindung II als auch die Zugabe des Trägers ist an sich unkritisch, bevorzugt arbeitet man bei Temperaturen von 0 bis 60°C über einen Zeitraum von 0,1 bis 6 Stunden bei Drücken von 0,5 bis 2,0 bar.

Nach dem Aufbringen der Mischung aus Metallocenkomplex I und Metallverbindung II auf den Träger wird i.a. das Lösungsmittel entfernt und der Feststoff getrocknet, der für sich keine nennenswerte Polymerisationsaktivität zeigt. Dieser Feststoff kann nun in einer weiteren Stufe b) zu einem beliebigen Zeitpunkt durch Umsetzung mit einer Lösung oder Suspension einer metalloceniumionenbildenden Verbindung aktiviert werden.

Geeignete metalloceniumionenbildende Verbindungen sind insbesondere starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel IV

M³X³X⁴X⁵ IV

bevorzugt, in der
- M³: ein Element der III. Hauptgruppe des Periodensystems bedeutet, insbesondere B, Al oder Ga, vorzugsweise B,
- X³, X⁴ und X⁵: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel IV, in der X³, X⁴ und X⁵ gleich sind, vorzugsweise Tris(pentafluorphenyl)boran.

Als ionische Verbindungen mit lewissauren Kationen sind Verbindungen der allgemeinen Formel V

[(A^{a+})Q₁Q₂...Q_{z}]^{d+} V

geeignet, in denen
- A: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen

- a: für ganze Zahlen von 1 bis 6 steht
- z: für ganze Zahlen von 0 bis 5
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Da die Aktivierung zu einem beliebigen Zeitpunkt, d.h. vor, bei oder nach der Dosierung des geträgerten Katalysatorsystems in den Reaktor, erfolgen kann, richten sich die Aktivierungsbedingungen nach diesem Zeitpunkt, sind aber an sich unkritisch. Die Menge an metalloceniumionenbildenden Verbindungen beträgt bevorzugt 0,1 bis 100 Äquivalente, bezogen auf den Metallocenkomplex I.

Mit Hilfe dieser erfindungsgemäßen geträgerten Katalysatorsysteme lassen sich Polyolefine, insbesondere Polymerisate von Alk-1-enen herstellen. Darunter werden Homo- und Copolymerisate von C₂- bis C₁₀-Alk-1-enen verstanden, wobei als Monomere vorzugsweise Ethylen, Propylen, But-1-en, Pent-1-en und Hex-1-en verwendet werden.

Aber auch Cycloolefine oder höhere Alk-1-ene sowie generell Alkene lassen sich als Monomere zur Homo- oder Copolymerisation einsetzen.

Die Herstellung der Polymerisate kann in den üblichen für die Polymerisation von Alkenen verwendeten Reaktoren entweder diskontinuierlich oder bevorzugt kontinuierlich durchgeführt werden. Geeignete Reaktoren sind u.a. kontinuierlich betriebene Schleifenreaktoren oder Rührkessel, wobei man gegebenenfalls auch eine Reihe von mehreren hintereinander geschalteten Rührkesseln verwenden kann, aber auch Hochdruckautoklaven oder Hochdruckrohrreaktoren.

Die Polymerisationsbedingungen sind an sich unkritisch, Drücke von 0,5 bis 3500 bar, vorzugsweise 1 bis 200 bar und Temperaturen von -60°C bis 280°C haben sich als geeignet erwiesen.

Polymerisationsreaktionen mit Hilfe der erfindungsgemäßen Katalysatorsysteme lassen sich in der Gasphase, in einer Suspension und in inerten Lösungsmitteln durchführen. Als Suspensions- bzw. Lösungsmittel eignen sich Kohlenwasserstoffe, bevorzugt C₄- bis C₁₀-Alkane.

Die mittlere Molmasse der gebildeten Polymerisate kann mit den in der Polymerisationstechnik üblichen Methoden gesteuert werden, beispielsweise durch Zufuhr von Reglern wie Wasserstoff, oder durch Veränderung der Reaktionstemperaturen. Durch Senkung der Reaktionstemperaturen lassen sich Polymerisate mit erhöhten mittleren Molmassen herstellen.

Die erfindungsgemäßen geträgerten Katalysatorsysteme zeichnen sich dadurch aus, daß sie zu einem beliebigen Zeitpunkt aktivierbar sind, daß das eingesetzte Metallocen zu einem großen Teil auf dem Träger fixiert wird und daß das Herstellverfahren nicht auf gut lösliche Metallocene beschränkt ist.

### Beispiele

### Beispiel 1

Aufbringen einer Mischung aus Dimethylsilandiylbis(-2-methylindenyl)zirkoniumdichlorid und Al(i-Butyl)₃ auf einen handelten anorganischen Träger

### Beispiel 1.1

### Trägervorbehandlung

20 g SiO₂ (SG332 d. Fa. Grace; Mittlerer Durchmesser: 50 µm; 12 h bei 100°C im Vakuum getrocknet) wurden in 200 ml trockenem Heptan suspendiert. Bei Raumtemperatur wurden 56 mmol Al(i-Butyl)₃ (als 2-molare Lösung in Heptan) innerhalb von 30 Minuten zugetropft, wobei die Temperatur auf 45 bis 50°C anstieg. Anschließend wurde über Nacht nachgerührt, der Feststoff abfiltriert und je zweimal mit 30 ml Hexan und 30 ml Pentan gewaschen. Schließlich wurde im Ölpumpenvakuum bis zur Gewichtskonstanz getrocknet.

### Beispiel 1.2

### Aufbringen der Mischung aus Metallocen I und Metallverbindung II

122 µmol (58,1mg) rac.-Dimethylsilandiylbis(-2-methylindenyl) zirkoniumdichlorid 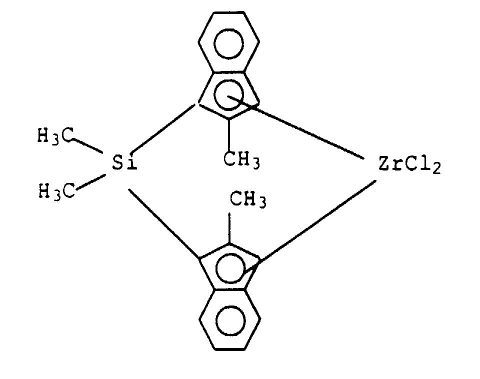 wurden in 50 ml absolutem Toluol suspendiert. Nach Zugabe von 2,5 mmol Al(i-Butyl)₃ (2-molare Lösung in Heptan) wurde die erhaltene Lösung 10 Minuten gerührt. Dann wurden 5 g des unter 1.1 hergestellten Trägers langsam zugegeben und die erhaltene Suspension 60 Minuten nachgerührt. Danach wurde das Lösungsmittel im Vakuum abgezogen und der feste Rückstand wurde im Ölpumpenvakuum getrocknet, bis ein gut rieselfähiges Pulver zurückblieb. Elementaranalytisch wurde ein Zr-Gehalt von 0,21 Gew.-%, entsprechend 23 µmol Metallocen pro g Träger bestimmt (Theoretischer Wert: 24,4 µmol/g Träger).

### Beispiele 2 bis 4

### Herstellung von Polypropylen (PP) in der Gasphase mit Tris(pentafluorphenyl)boran als metalloceniumionenbildende Verbindung

### Beispiel 2

Bei Raumtemperatur wurden in einem sauberen und mit Stickstoff gespülten 2 l-Stahlautoklaven 10 g PP-Gries als Rührvorlage vorgelegt. Anschließend wurden 200 ml flüssiges Propen und 2,5 mmol Al(i-Butyl)₃ (2-molare Lösung in Heptan), 1,034 g des in Beispiel 1 hergestellten Trägerkatalysators sowie 15 mg Tris(pentafluorphenyl)boran (gelöst in Toluol) in dieser Reihenfolge zugegeben. Nach Zugabe des Borans wurde zunächst 30 Minuten ohne externe Heizung polymerisiert, wobei die Temperatur allmählich auf 30°C kletterte. Anschließend wurde weitere 90 Minuten bei 65°C und 24 bar Propendruck in der Gasphase polymerisiert. Nach insgesamt 120 Minuten wurde durch Ablassen des Propens gestoppt. Es wurden 138 g isotaktisches PP mit Tₘ = 145,8°C und
M_{w} = 131 400 g/mol erhalten.

### Beispiel 3

Bei Raumtemperatur wurden in einem sauberen und mit Stickstoff gespülten 2 l-Stahlautoklaven 30 g PP-Gries als Rührvorlage vorgelegt. Nach Zugabe von 2,5 mmol Al(i-Butyl)₃ (2-molare Lösung in Heptan) wurde 10 Minuten gerührt. Anschließend wurde 1 bar Propen aufgepreßt und 1,046 g des in Beispiel 1 hergestellten Trägerkatalysators sowie 45 mg Tris(pentafluorphenyl)boran (als Lösung in Toluol) zugegeben. Der Propendruck wurde langsam auf 8 bar erhöht und man polymerisierte zunächst 80 Minuten ohne externes Aufheizen. Hierbei stieg die Innentemperatur auf 41°C. Anschließend wurde auf 50°C aufgeheizt und man polymerisierte weitere 40 Minuten. Nach insgesamt 120 Minuten wurde durch Ablassen des Propens gestoppt. Es wurden 61 g isotaktisches PP mit geringem Anteil an Feinstaub erhalten.

### Beispiel 4

Bei Raumtemperatur wurden in einem sauberen und mit Stickstoff gespülten 2 l-Stahlautoklaven 30 g PP-Gries als Rührvorlage vorgelegt. Nach Zugabe von 2,5 mmol Al(i-Butyl)₃ (2-molare Lösung in Heptan) wurde 10 Minuten gerührt. Anschließend wurde 1 bar Propen aufgepreßt und 1,005 g des in Beispiel 1 hergestellten Trägerkatalysators sowie 45 mg Tris(pentafluorphenyl)boran (als Lösung in Toluol) zugegeben. Der Propendruck wurde langsam auf 8 bar erhöht und man polymerisierte zunächst 120 Minuten ohne externes Aufheizen. Hierbei stieg die Innentemperatur auf 45°C. Anschließend wurde auf 60°C aufgeheizt und man polymerisierte weitere 60 Minuten. Nach insgesamt 120 Minuten wurde durch Ablassen des Propens gestoppt. Es wurden 110 g isotaktisches PP mit Tₘ = 144,3°C und M_{w} = 227 300 g/mol und geringem Anteil an Feinstaub erhalten.

### Beispiel 5

### Aufbringen einer Mischung aus Dimethylsilandiylbis(-2-methylbenzindenyl)zirkoniumdichlorid und Al(i-Butyl)₃ auf einen vorbehandelten anorganischen Träger

### Beispiel 5.1

### Trägervorbehandlung Wie Beispiel 1.1.

### Beispiel 5.2

### Aufbringen der Mischung aus Metallocen I und Metallverbindung II

100 µmol (58 mg) rac.-Dimethylsilandiylbis(-2-methylbenzindenyl)zirkoniumdichlorid 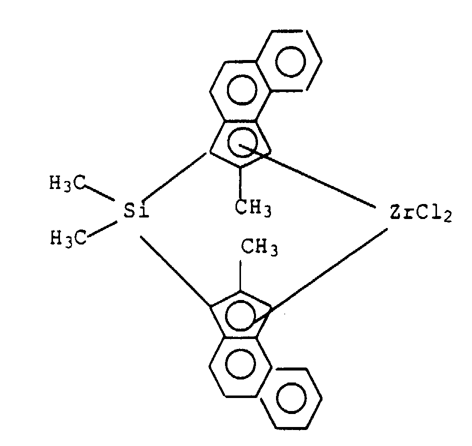 wurden in 50 ml absolutem Toluol suspendiert. Nach Zugabe von 2,5 mmol Al(i-Butyl)₃ (2-molare Lösung in Heptan) wurde die erhaltene Lösung 15 Minuten gerührt. Dann wurden 7,2 g des unter 5.1 hergestellten Trägers langsam zugegeben und die erhaltene Suspension wurde 60 Minuten nachgerührt. Danach wurde das Lösungsmittel im Vakuum abgezogen und der feste Rückstand im Ölpumpenvakuum getrocknet, bis ein gut rieselfähiges Pulver zurückblieb.

### Beispiel 6

### Herstellung von Polypropylen (PP) in der Gasphase mit Tris(pentafluorphenyl)boran als metalloceniumionenbildende Verbindung

Bei Raumtemperatur wurden in einem sauberen und mit Stickstoff gespülten 2 l-Stahlautoklaven 30 g PP-Gries als Rührvorlage vorgelegt. Nach Zugabe von 2,5 mmol Al(i-Butyl)₃ (2-molare Lösung in Heptan) wurde 10 Minuten gerührt. Anschließend wurde 1 bar Propen aufgepreßt und 1,054 g des in Beispiel 5 hergestellten Katalysators sowie 45 mg Tris(pentafluorphenyl)boran (als Lösung in Toluol) zugegeben. Der Propendruck wurde langsam auf 4 bar erhöht und man polymerisierte zunächst 20 Minuten vor. Danach wurde der Druck auf 8 bar erhöht und es wurden nochmals 15 mg Tris(pentafluorphenyl)boran zugegeben. Die Temperatur stieg ohne äußere Heizung auf 50°C und wurde dann durch Kühlung auf dieser Temperatur gehalten. Der Propendruck wurde nochmals erhöht (12 bar) und man polymerisierte weitere 60 Minuten. Nach insgesamt 90 Minuten wurde durch Ablassen des Propens gestoppt. Es wurden 125 g isotaktisches PP mit Tₘ = 142,1°C und M_{w} = 172 000 g/mol und geringem Anteil an Feinstaub erhalten.

Die mittleren Molekulargewichte M_{w} (Gewichtsmittel) wurden durch Gelpermeationschromatographie bestimmt.

### Beispiel 7

Aufbringen einer Mischung aus Bis(cyclopentadienyl)zirconiumdichlorid und Al(i-Butyl)₃ auf einen vorbehandelten anorganischen Träger.

### Beispiel 7.1

### Trägervorbehandlung Wie Beispiel 1.1.

### Beispiel 7.2

### Aufbringen der Mischung aus Metallocen I und Metallverbindung II

50 mg (0,17 mmol) Bis(cyclopentadienyl)zirconiumdichlorid wurden in 50 ml abs. Toluol gelöst. Nach Zugabe von 5,0 mmol Al(i-Butyl)₃ (2-molare Lösung in Heptan) wurde die erhaltene Lösung 10 Minuten gerührt. Dann wurden 5,0 g des unter 7.1 hergestellten Trägers langsam zugegeben und die erhaltene Suspension wurde 60 Minuten nachgerührt. Danach wurde das Lösungsmittel im Vakuum abgezogen und der feste Rückstand im Ölpumpenvakuum getrocknet, bis ein gut rieselfähiges Pulver zurückblieb.

### Beispiel 8

### Herstellung von Polyethylen (PE) in Suspension mit Tris(pentafluorphenyl)boran als metalloceniumionenbildende Verbindung

450 mg des unter 7.2 hergestellten Katalysators wurden in 1000 ml abs. Toluol, dem 2 mmol Al(i-Butyl)₃ (als 2-molare Lösung in Heptan) zugesetzt waren, suspendiert. Die Suspension wurde unter Einleitung von Ethen (1 bar) auf 70°C erwärmt und über einen Tropftrichter wurde eine Lösung von 25 mg (0,05 mmol) Tris(pentafluorphenyl)boran in 10 ml abs. Toluol langsam zugetropft. Bereits nach Zugabe von 1 ml der Lösung wurde eine deutliche Ethylenaufnahme beobachtet, die schließlich ~10 l/h erreichte. Nach einer Stunde Polymerisationsdauer wurden nochmals 25 mg Tris(pentafluorphenyl)boran (gelöst in 10 ml abs. Toluol) zugegeben, worauf sich die Ethylenaufnahme auf 25 l/h erhöhte. Nach insgesamt 75 Minuten Polymerisationsdauer war der Ansatz nicht mehr rührbar und die Polymerisation wurde abgebrochen. Die Aufarbeitung lieferte 18 g PE mit [η] - 3,6 dl/g (gemessen in c,t-Decalin bei 135°C an einer 0,01 gew.-%igen Lösung (DIN 53 728, Teil 4)).

### Beispiel 9 (Vergleichsbeispiel)

5 mg (0,012 mmol) Bis(n-Butylcyclopentadienyl)zirconiumdichlorid wurden in 1000 ml abs. Toluol gelöst. Nach Zugabe von 4 mmol Al(i-Butyl)₃ wurde die Lösung 10 Minuten nachgerührt und dann auf 70°C aufgewärmt, wobei gleichzeitig Ethen eingeleitet wurde (1 bar). Zugabe von 5 mg (0,01 mmol) Tris(pentafluorphenyl)boran, gelöst in 2 ml abs. Toluol, führte zu keiner erkennbaren Reaktion. Auch die Zugabe von weiteren 10 mg (0,025 mmol) Bis(n-Butylcyclopentadienyl)zirconiumdichlorid führte zu keiner Reaktion.

### Beispiel 10

Aufbringen einer Mischung aus Bis(n-butylcyclopentadienyl)zirconiumdichlorid und Al(i-Butyl)₃ auf einen vorbehandelten anorganischen Träger

### Beispiel 10.1

### Trägervorbehandlung Wie Beispiel 1.1

### Beispiel 10.2

### Aufbringen der Mischung aus Metallocen I und Metallverbindung II

50 mg (0,12 mmol) Bis(cyclopentadienyl)zirconiumdichlorid wurden in 50 ml abs. Toluol gelöst. Nach Zugabe von 5,0 mmol Al(i-Butyl)₃ (2-molare Lösung in Heptan) wurde die erhaltene Lösung 10 Minuten gerührt. Dann wurden 5,0 g des unter 10.1 hergestellten Trägers langsam zugegeben und die erhaltene Suspension wurde 60 Minuten nachgerührt. Danach wurde das Lösungsmittel im Vakuum abgezogen und der feste Rückstand im Ölpumpenvakuum getrocknet, bis ein gut rieselfähiges Pulver zurückblieb.

### Beispiel 11

### Herstellung von Polyethylen (PE) in Suspension mit Tris(pentafluorphenyl)boran als metalloceniumionenbildende Verbindung

450 mg des unter 10.2 hergestellten Katalysators wurden in 1000 ml abs. Toluol, dem 2 mmol Al(i-Butyl)₃ (als 2-molare Lösung in Heptan) zugesetzt waren, suspendiert. Die Suspension wurde unter Einleitung von Ethen (1 bar) auf 70°C erwärmt und 5 mg (0,01 mmol) Tris(pentafluorphenyl)boran, gelöst in 2 ml abs. Toluol, wurden zugegeben. Eine deutliche Ethylenaufnahme wurde beobachtet. Die Polymerisation wurde abgebrochen als der Ansatz nicht mehr rührbar war. Die Aufarbeitung lieferte 39 g PE mit [η] = 3,8 dl/g.

### Beispiel 12

Aufbringen einer Mischung aus rac.-Dimethylsilandiylbis(2-methylbenzindenyl)zirkoniumdichlorid und Al(i-Butyl)₃ auf einen vorbehandelten anorganischen Träger

### Beispiel 12.1

### Trägervorbehandlung

Wie Beispiel 1.1.: Der so vorbehandelte Träger hatte einen Al-Gehalt von 3,5 Gew.-% (lt. Elementaranalyse).

### Beispiel 12.2

### Aufbringen der Mischung aus Metallocen I und Metallverbindung II

35 mg (0,60 µmol) rac.-Dimethylsilandiylbis(2-methylbenzindenyl)zirkoniumdichlorid wurden in 50 ml abs. Toluol gelöst. Nach Zugabe von 2,5 mmol Al(i-Butyl)₃ (2-molare Lösung in Heptan) wurde die erhaltene Lösung 10 Minuten gerührt. Dann wurden 5,0 g des unter 12.1 hergestellten Trägers langsam zugegeben und die erhaltene Suspension wurde 60 Minuten nachgerührt. Danach wurde das Lösungsmittel im Vakuum abgezogen und der feste Rückstand im Ölpumpenvakuum getrocknet, bis ein gut rieselfähiges Pulver zurückblieb. Elemantaranalytisch wurde ein Al-Gehalt von 4,1 Gew.-% bestimmt.

### Beispiel 13

### Herstellung von Polyethylen (PE) in Suspension mit Tris(pentafluorphenyl)boran als metalloceniumionenbildende Verbindung

395 mg des unter 12.2 hergestellten Katalysators wurden in 1000 ml abs. Toluol, dem 2 mmol Al(i-Butyl)₃ (als 2-molare Lösung in Heptan) zugesetzt waren, suspendiert. Die Suspension wurde unter Einleitung von Ethen (1 bar) auf 70°C erwärmt und über einen Tropftrichter wurde eine Lösung von 25 mg (0,05 mmol) Tris(pentafluorphenyl)boran in 10 ml abs. Toluol langsam zugetropft. Bereits nach Zugabe von 1 ml der Lösung wurde eine deutliche Ethylenaufnahme von ~10 l/h beobachtet, die schließlich ~70 l/h erreichte. Nach 30 Minuten wurde der Versuch abgebrochen, da der Ansatz nicht mehr rührbar war. Die Aufarbeitung lieferte 31 g PE mit [η] = 5,0 dl/g.

## Patentansprüche

1. Geträgerte Katalysatorsysteme, erhältlich durch
a1) Herstellung einer Mischung aus
A) mindestens einem Metallocenkomplex der allgemeinen Formel I 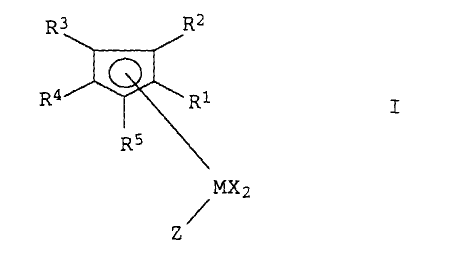 in der die Substituenten folgende Bedeutung haben:
M Titan, Zirkonium, Hafnium, Vanadium, Niob oder Tantal,
X Fluor, Chlor, Brom, Iod, Wasserstoff, C₁- bis C₁₀-Alkyl, C₆- bis C₁₅-Aryl oder -OR⁶,
wobei R⁶
C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
R¹ bis R⁵ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R⁷)₃ mit
R⁷ C1- bis C₁₀-Alkyl, C₆- bis C₁₅-Aryl oder C₃- bis C₁₀-Cycloalkyl,
Z für X oder 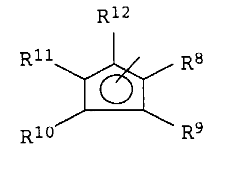 steht,
wobei die Reste R⁸ bis R¹²
Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende cyclische Gruppen stehen können, oder Si(R¹³)₃ mit
R¹³ C₁- bis C₁₀-Alkyl, C₆- bis C₁₅-Aryl oder C₃- bis C₁₀-Cycloalkyl,
oder wobei die Reste R⁴ und Z gemeinsam eine Gruppierung -[Y(R¹⁴)₂]ₙ-E- bilden, in der
Y für Silicium, Germanium, Zinn oder Kohlenstoff steht,
R¹⁴ für Wasserstoff C₁- bis C₁₀-Alkyl, C₃- bis C₁₀-Cycloalkyl oder C₆- bis C₁₅-Aryl,
n für die Zahlen 1, 2, 3 oder 4
und
E für 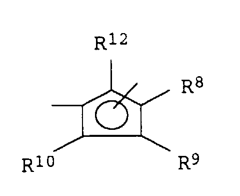 steht
und
B) mindestens einer Metallverbindung der allgemeinen Formel II
M¹(R¹⁵)ₘ(X¹)ₒ II
in der
M¹ ein Alkali-, Erdalkalimetall oder ein Metall der III. Hauptgruppe des Periodensystems bedeutet,
R¹⁵ Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
X¹ Fluor, Chlor, Brom oder Jod,
m eine ganze Zahl von 1 bis 3,
und
o eine ganze Zahl von 0 bis 2, wobei die Summe m+o der Wertigkeit von M¹ entspricht
in einem inerten Lösungsmittel,
a2) Zugabe eines Trägers, der gegebenenfalls mit mindestens einer Metallverbindung der allgemeinen Formel III
M²(R¹⁶)ₚ(X²)_{q} III
in der
M² ein Alkali-, Erdalkalimetall, ein Metall der III. Hauptgruppe des Periodensystems oder Silicium bedeutet,
R¹⁶ Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
X² Fluor, Chlor, Brom oder Jod,
p eine ganze Zahl von 1 bis 3,
und
q eine ganze Zahl von 0 bis 2, wobei die Summe p+q der Wertigkeit von M² entspricht
vorbehandelt sein kann, zu der unter a1) erhaltenen Mischung,
a3) Entfernen des Lösungsmittels im Vakuum
und
b) anschließender Aktivierung durch Umsetzung mit einer Lösung oder Suspension einer metalloceniumionenbildenden Verbindung.

2. Geträgerte Katalysatorsysteme nach Anspruch 1, dadurch gekennzeichnet, daß als Träger ein Feststoff mit einer Teilchengröße von 1 bis 200 µm verwendet wird.

3. Geträgerte Katalysatorsysteme nach den Ansprüchen 1 bis 2, dadurch gekennzeichnet, daß als metalloceniumionenbildende Verbindung eine starke, neutrale Lewissäure eingesetzt wird.

4. Geträgerte Katalysatorsysteme nach den Ansprüchen 1 bis 3, dadurch gekennzeichnet, daß als starke, neutrale Lewissäure Verbindungen der allgemeinen Formel IV
M³X³X⁴X⁵ IV
in der
M³ ein Element der III. Hauptgruppe des Periodensystems bedeutet,
X³, X⁴ und X⁵ für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atomen im Arylrest oder Fluor, Chlor, Brom oder Jod stehen
eingesetzt werden.

5. Geträgerte Katalysatorsysteme nach den Ansprüchen 1 bis 2, dadurch gekennzeichnet, daß als metalloceniumionenbildende Verbindung eine ionische Verbindung mit lewissaurem Kation eingesetzt wird.

6. Geträgerte Katalysatorsysteme nach den Ansprüchen 1 bis 2, dadurch gekennzeichnet, daß als metalloceniumionenbildende Verbindung eine ionische Verbindung mit einer Brönsted-Säure als Kation eingesetzt wird.

7. Verfahren zur Herstellung eines geträgerten Katalysatorsystems gemäß den Verfahrensbedingungen von Anspruch 1.

8. Verwendung von geträgerten Katalysatorsystemen gemäß den Ansprüchen 1 bis 6 zur Herstellung von Polyolefinen.

9. Verfahren zur Herstellung von Polyolefinen bei Drücken von 0,5 bis 3500 bar und Temperaturen von -60 bis +280°C in Gegenwart eines Katalysatorsystems, dadurch gekennzeichnet, daß man geträgerte Katalysatorsysteme gemäß den Ansprüchen 1 bis 6 verwendet.

10. Verfahren zur Herstellung von Polyolefinen nach Anspruch 9, dadurch gekennzeichnet, daß die Aktivierung b) des Katalysatorsystems unmittelbar vor, bei oder nach der Dosierung des Katalysatorsystems in den Reaktor erfolgt.

## Claims

1. A supported catalyst system obtainable by
a1) preparation of a mixture of
A) at least one metallocene complex of the formula I 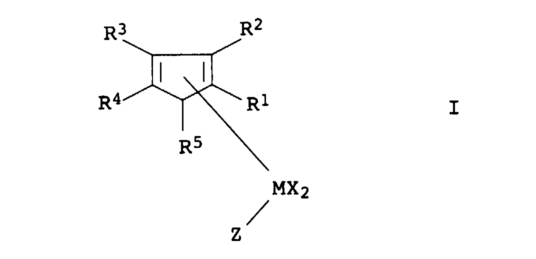 where
M is titanium, zirconium, hafnium, vanadium, niobium or tantalum,
X is fluorine, chlorine, bromine, iodine, hydrogen, C₁-C₁₀-alkyl, C₆-C₁₅-aryl or -OR⁶,
R⁶ is C₁-C₁₀-alkyl, C₆-C₁₅-aryl, alkylaryl, arylalkyl, fluoroalkyl or fluoroaryl, where each alkyl radical is of 1 to 10 carbon atoms and each aryl radical is of 6 to 20 carbon atoms,
R¹ to R⁵ are each hydrogen, C₁-C₁₀-alkyl, 5-membered to 7-membered cycloalkyl, which in turn may carry a C₁-C₁₀-alkyl substituent, C₆-C₁₅-aryl or arylalkyl, where two neighboring radicals together may form a cyclic group of 4 to 15 carbon atoms, or Si(R⁷)₃,
R⁷ is C₁-C₁₀-alkyl, C₆-C₁₅-aryl or C₃-C₁₀-cycloalkyl,
Z is X or 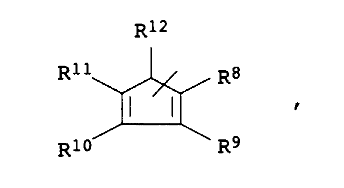
R⁸ to R¹² are each hydrogen, C₁-C₁₀-alkyl, 5-membered to 7-membered cycloalkyl, which in turn may carry a C₁-C₁₀-alkyl substituent, C₆-C₁₅-aryl or arylalkyl, where two neighboring radicals together may furthermore form a cyclic group of 4 to 15 carbon atoms, or Si(R¹³)₃,
R¹³ is C₁-C₁₀-alkyl, C₆-C₁₅-aryl or C₃-C₁₀-cycloalkyl,
or R⁴ and Z together form a group -[Y(R¹⁴)₂]ₙ-E-,
Y is silicon, germanium, tin or carbon,
R¹⁴ is hydrogen, C₁-C₁₀-alkyl, C₃-C₁₀-cycloalkyl or C₆-C₁₅-aryl,
n is 1, 2, 3 or 4,
and
E is 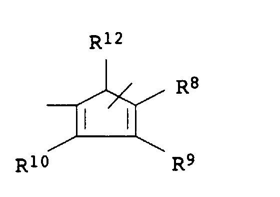
and
B) at least one metal compound of the formula II
M¹(R¹⁵)ₘ(X¹)ₒ II
where
M¹ is an alkali metal, an alkaline earth metal or a metal of main group III of the Periodic Table,
R¹⁵ is hydrogen, C₁-C₁₀-alkyl, C₆-C₁₅-aryl, alkylaryl or arylalkyl, where each alkyl radical is of 1 to 10 carbon atoms and each aryl radical is of 6 to 20 carbon atoms,
X¹ is fluorine, chlorine, bromine or iodine,
m is an integer from 1 to 3,
and
o is an integer from 0 to 2, the sum m+o corresponding to the valency of M¹,
in an inert solvent,
a2) addition of a carrier which, if required, may be pretreated with at least one metal compound of the formula III
M²(R¹⁶)ₚ(X²)_{q} III
where
M² is an alkali metal, an alkaline earth metal, a metal of main group III of the Periodic Table or silicon,
R¹⁶ is hydrogen, C₁-C₁₀-alkyl, C₆-C₁₅-aryl, alkylaryl or arylalkyl, where each alkyl radical is of 1 to 10 carbon atoms and each aryl radical is of 6 to 20 carbon atoms,
X² is fluorine, chlorine, bromine or iodine,
p is an integer from 1 to 3,
and
q is an integer from 0 to 2, the sum p+q corresponding to the valency of M²,
to the mixture obtained under a1),
a3) removal of the solvent in vacuo and
b) subsequent activation by reaction with a solution or suspension of a compound forming metallocenium ions.

2. A supported catalyst system as claimed in claim 1, wherein the carrier used is a solid having a particle size of from 1 to 200 µm.

3. A supported catalyst system as claimed in claim 1 or 2, wherein a strong, neutral Lewis acid is used as the compound forming metallocenium ions.

4. A supported catalyst system as claimed in any of claims 1 to 3, wherein the strong, neutral Lewis acid used is a compound of the formula IV
M³X³X⁴X⁵ IV
where
M³ is an element of main group III of the Periodic Table and
X³, X⁴ and X⁵ are each hydrogen, C₁-C₁₀-alkyl, C₆-C₁₅-aryl, alkylaryl, arylalkyl, haloalkyl or haloaryl, where each alkyl radical is of 1 to 10 carbon atoms and each aryl radical is of 6 to 20 carbon atoms, or fluorine, chlorine, bromine or iodine.

5. A supported catalyst system as claimed in claim 1 or 2, wherein an ionic compound having a Lewis acid cation is used as the compound forming metallocenium ions.

6. A supported catalyst system as claimed in claim 1 or 2, wherein an ionic compound having a Brönsted acid as the cation is used as the compound forming metallocenium ions.

7. A process for the preparation of a supported catalyst system according to the process conditions of claim 1.

8. The use of a supported catalyst system as claimed in any of claims 1 to 6 for the preparation of a polyolefin.

9. A process for the preparation of a polyolefin at from 0.5 to 3500 bar and from -60 to +280°C in the presence of a catalyst system, wherein a supported catalyst system as claimed in any of claims 1 to 6 is used.

10. A process for the preparation of a polyolefin as claimed in claim 9, wherein the activation b) of the catalyst system is carried out immediately before, during or after the metering of the catalyst system into the reactor.

## Revendications

1. Systèmes catalytiques sur support, que l'on peut obtenir par
a1) préparation d'un mélange
A) d'au moins un complexe de métallocène de la formule générale I: 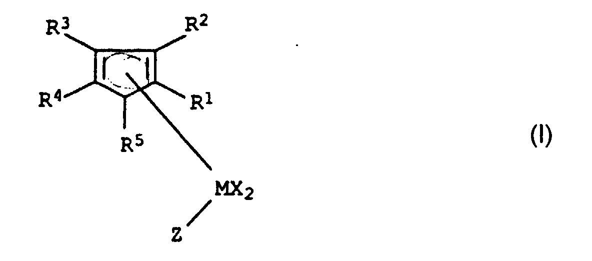 dans lequel les substituants ont la signification suivante :
M représente du titane, du zirconium, de l'hafnium, du vanadium, du niobium ou du tantale,
X représente du fluor, du chlore, du brome, de l'iode, de l'hydrogène, de l'alkyle en C₁-C₁₀, de l'aryle en C₆-C₁₅ ou -OR⁶,
où R⁶ représente de l'alkyle en C₁-C₁₀, de l'aryle en C₆-C₁₅, de l'alkylaryle, de l'arylalkyle, du fluoroalkyle ou du fluoroaryle comprenant chacun 1 à 10 atomes de C dans le radical alkyle et 6 à 20 atomes de C dans le radical aryle,
R¹ à R⁵ représentent de l'hydrogène, de l'alkyle en C₁-C₁₀, du cycloalkyle pentagonal à heptagonal, qui à son tour peut porter un alkyle en C₁-C₁₀, comme substituant, de l'aryle en C₆-C₁₅ ou de l'arylalkyle, deux radicaux voisins pouvant éventuellement aussi former conjointement des groupes cycliques présentant 4 à 15 atomes de C, ou Si(R⁷)₃,
où R⁷ représente de l'alkyle en C₁-C₁₀, de l'aryle en C₆-C₁₅ ou du cycloalkyle en C₃-C₁₀,
Z représente X ou 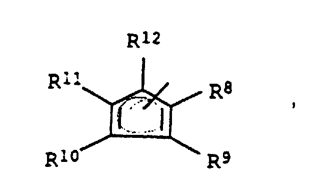
où les radicaux R⁸ à R¹² représentent de l'hydrogène, de l'alkyle en C₁-C₁₀, du cycloalkyle pentagonal à heptagonal, qui à son tour peut porter un alkyle en C₁-C₁₀, comme substituant, de l'aryle en C₆-C₁₅ ou de l'arylalkyle, deux radicaux voisins pouvant éventuellement également former conjointement des groupes cycliques présentant 4 à 15 atomes de C, ou Si(R¹³)₃,
où R¹³ représente de l'alkyle en C₁-C₁₀, de l'aryle en C₆-C₁₅, ou du cycloalkyle en C₃-C₁₀,
ou les radicaux R⁴ et Z forment conjointement un groupement -[Y(R¹⁴)₂]ₙ-E-, dans lequel
Y représente du silicium, du germanium, de l'étain ou du carbone,
R¹⁴ représente de l'hydrogène, de l'alkyle en C₁-C₁₀, du cycloalkyle en C₃-C₁₀ ou de l'aryle en C₆-C₁₅,
n représente les chiffres 1, 2, 3 ou 4, et
E représente 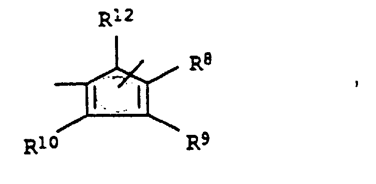 et
B) d'au moins un composé métallique de la formule générale II :
M¹(R¹⁵)ₘ(X¹)ₒ (II)
dans laquelle
M¹ représente un métal alcalin, un métal alcalino-terreux ou un métal du groupe principal III du système périodique,
R¹⁵ représente de l'hydrogène, de l'alkyle en C₁-C₁₀, de l'aryle en C₆-C₁₅, de l'alkylaryle ou de l'arylalkyle comportant chacun 1 à 10 atomes de C dans le radical alkyle et 6 à 20 atomes de C dans le radical aryle,
X¹ représente du fluor, du chlore, du brome ou de l'iode,
m est un nombre entier de 1 à 3, et
o est un nombre entier de 0 à 2, la somme m+o correspondant à la valence de M¹,
dans un solvant inerte,
a2) addition d'un support, qui peut être prétraité éventuellement par au moins un composé métallique de la formule générale III :
M²(R¹⁶)ₚ(X²)_{q} (III)
dans laquelle
M² représente un métal alcalin, un métal alcalino-terreux, un métal du groupe principal III du système périodique ou du silicium,
R¹⁶ représente de l'hydrogène, de l'alkyle en C₁-C₁₀, de l'aryle en C₆-C₁₅, de l'alkylaryle ou de l'arylalkyle comportant chacun 1 à 10 atomes de C dans le radical alkyle et 6 à 20 atomes de C dans le radical aryle,
X² représente du fluor, du chlore, du brome ou de l'iode,
p est un nombre entier de 1 à 3,
et
q représente un nombre entier de 0 à 2, la somme p+q correspondant à la valence de M²,
au mélange obtenu sous a1),
a3) élimination du solvant sous vide, et
b) activation ultérieure par réaction avec une solution ou suspension d'un composé générateur d'ions métallocénium.

2. Systèmes catalytiques sur support suivant la revendication 1, caractérisés en ce que, comme support, on utilise une substance solide ayant une dimension des particules de 1 à 200 µm.

3. Systèmes catalytiques sur support suivant l'une des revendications 1 et 2, caractérisés en ce que, comme composé générateur d'ions métallocénium, on met en oeuvre un acide de Lewis neutre, fort.

4. Systèmes catalytiques sur support suivant l'une des revendications 1 à 3, caractérisés en ce que, comme acide de Lewis neutre, fort, on met en oeuvre des composés de la formule générale IV :
M³X³X⁴X⁵ (IV)
dans laquelle
M³ représente un élément du groupe principal III du système périodique,
X^{3,} X⁴ et X⁵ représentent de l'hydrogène, de l'alkyle en C₁-C₁₀, de l'aryle en C₆-C₁₅, de l'alkylaryle, de l'arylalkyle, de l'halogénoalkyle ou de l'halogénoaryle avec chaque fois 1 à 10 atomes de C dans le radical alkyle et 6 à 20 atomes de C dans le radical aryle, ou du fluor, du chlore, du brome ou de l'iode.

5. Systèmes catalytiques sur support suivant l'une des revendications 1 et 2, caractérisés en ce que, comme composé générateur d'ions métallocénium, on met en oeuvre une liaison ionique avec un cation d'acide de Lewis.

6. Systèmes catalytiques sur support suivant l'une des revendications 1 et 2, caractérisés en ce que, comme composé générateur d'ions métallocénium, on met en oeuvre un composé ionique ayant un acide de Brönsted, comme cation.

7. Procédé de préparation d'un système catalytique sur support selon les conditions de procédé de la revendication 1.

8. Utilisation de systèmes catalytiques sur support suivant l'une des revendications 1 à 6, pour la préparation de polyoléfines.

9. Procédé de préparation de polyoléfines à des pressions de 0,5 à 3500 bars et à des températures de -60 jusqu'à +280°C, en présence d'un système catalytique, caractérisé en ce qu'on utilise des systèmes catalytiques sur support selon les revendications 1 à 6.

10. Procédé de préparation de polyoléfines suivant la revendication 9, caractérisé en ce que l'activation b) du système catalytique a lieu dans le réacteur directement avant, pendant ou après le dosage du système catalytique.
